# FASCICULE DE BREVET EUROPEEN

(11) **EP 2 911 913 B1**
(45) Date de publication et mention de la délivrance du brevet: **05.04.2017**
(21) Numéro de dépôt: 13779836.9
(22) Date de dépôt: 21.10.2013
(51) Int. Cl.: B60N 2/36, B60R 5/04

(54) **DISPOSITIF DE RÉGLAGE POUR RÉGLER L'INCLINAISON D'UN VOLET DE FOND D'UN COFFRE DE VÉHICULE AUTOMOBILE, ET VÉHICULE AUTOMOBILE COMPRENANT UN TEL DISPOSITIF DE RÉGLAGE**
VORRICHTUNG ZUM EINSTELLEN DER NEIGUNG EINER BODENKLAPPE DES KOFFERRAUMBODENS BEI EINEM KRAFTFAHRZEUG SOWIE EIN KRAFTFAHRZEUG MIT GENANNTER EINSTELLVORRICHTUNG
ADJUSTMENT DEVICE FOR ADJUSTING THE ANGLE OF A BOTTOM FLAP OF A MOTOR VEHICLE TRUNK, AND MOTOR VEHICLE COMPRISING SUCH AN ADJUSTMENT DEVICE

(30) Priorité: 26.10.2012 FR 1202868
(43) Date de publication de la demande: 02.09.2015
(73) Titulaire: Renault S.A.S., 92100 Boulogne-Billancourt (FR)
(72) Inventeur: MASSON, Xavier, F-78310 Maurepas (FR)
(86) Numéro de dépôt international: PCT/EP2013/071986
(87) Numéro de publication internationale: WO 2014/064054

(56) Documents cités:
- GB-A- 2 410 223
- JP-A- 2003 300 431
- US-A1- 2009 074 547

## Description

### DOMAINE TECHNIQUE AUQUEL SE RAPPORTE L'INVENTION

La présente invention concerne de manière générale les véhicules automobiles dont les dossiers de sièges ou de banquettes arrières sont montés mobiles à basculement, afin d'accroître au besoin le volume de leurs coffres.

Elle concerne plus particulièrement un dispositif de réglage pour régler l'inclinaison d'un volet de fond prévu au fond d'un coffre de véhicule automobile.

Elle concerne en particulier un véhicule automobile comprenant un tel dispositif de réglage.

### ARRIERE-PLAN TECHNOLOGIQUE

Sur la majorité des véhicules automobiles, les sièges comportent des dossiers pouvant être repliés sur leur assise pour permettre d'agrandir le volume initial du coffre.

Ces dossiers sont alors typiquement rabattus par l'usager lorsque ce dernier souhaite profiter d'un coffre avec un espace supérieur pour le transport, par exemple, de bagages.

Lorsque ces dossiers sont rabattus, on constate qu'il apparait une marche à la jonction entre le coffre initial et les dossiers rabattus.

Cette marche forme alors un obstacle qui complique le chargement du coffre par l'usager.

II est alors connu de placer au fond du coffre un volet mobile en rotation entre une position horizontale et une position inclinée.

Lorsque les dossiers ne sont pas rabattus, ce volet est laissé en position horizontale pour optimiser l'espace de chargement du coffre.

Lorsque les dossiers sont rabattus, le volet est alors amené manuellement en position inclinée de manière à réaliser une pente continue pour couvrir la marche formée dans le coffre.

L'inconvénient de ce volet est que, lorsque l'usager souhaite augmenter le volume du coffre, il est forcé d'effectuer de nombreuses opérations manuelles, qui sont longues et fastidieuses à mettre en oeuvre. Ainsi, l'usager doit basculer le dossier du siège vers sa position rabattue, lever le volet, positionner le volet pour qu'il couvre la marche du coffre de manière adaptée, puis le bloquer dans une position stable.

Il est aussi connu de JP2003 300431A de déplacer un volet de fond d'un coffre de véhicule automobile à la faveur du basculement d'un dossier de siège automobile.

### OBJET DE L'INVENTION

Afin de remédier à l'inconvénient précité de l'état de la technique, la présente invention propose un dispositif de réglage permettant de régler automatiquement l'inclinaison du volet de fond du coffre, à la faveur du basculement du dossier de siège du véhicule automobile.

Plus particulièrement, on propose selon l'invention un dispositif de réglage permettant de régler l'inclinaison d'un volet de fond d'un coffre de véhicule automobile à la faveur du basculement d'un dossier de siège du véhicule automobile, qui comprend :
- un support,
- un coulisseau qui est adapté à être monté mobile en translation sur une face d'appui du support entre une première et une seconde positions extrêmes, selon un axe de translation, ce coulisseau présentant une première face d'extrémité sur laquelle une partie du dossier de siège est adaptée à venir en appui à la faveur du basculement du dossier de siège pour repousser le coulisseau vers sa première position extrême, et une face principale comportant une rampe qui est inclinée par rapport audit axe de translation et sur laquelle le volet de fond est adapté à s'appuyer de telle sorte que la translation du coulisseau vers sa première position extrême provoque l'inclinaison du volet de fond, et
- un moyen de rappel dudit coulisseau vers sa seconde position extrême.

Ainsi, grâce à l'invention, lorsque l'usager bascule le dossier de siège, ce dossier repousse le coulisseau de telle manière que sa rampe coopère avec le volet de fond du coffre pour l'incliner, le positionner, et le bloquer dans une position optimale, sans que l'usager ait besoin de le manoeuvrer manuellement.

D'autres caractéristiques non limitatives et avantageuses du dispositif de réglage conforme à l'invention sont les suivantes :
- la face principale du coulisseau comprend un méplat supérieur s'étendant entre la rampe et la première face d'extrémité, dans un plan parallèle audit axe de translation ;
- la face principale du coulisseau comprend un méplat inférieur s'étendant entre la rampe et une seconde face d'extrémité qui est située à l'opposée de ladite première face d'extrémité, dans un plan parallèle audit axe de translation ;

- le coulisseau présente une cavité en creux dans ladite première face d'extrémité, qui loge un moyen de débrayage adapté à dissocier l'inclinaison du volet de fond du basculement du dossier de siège ;
- le moyen de débrayage comprend, d'une part, une lame contre laquelle ladite partie du dossier de siège est adaptée à venir en appui à la faveur du basculement du dossier de siège et qui est adaptée à s'enfoncer dans ladite cavité, et, d'autre part, un ressort qui s'interpose entre un fond de ladite cavité et ladite lame, et, qui présente une raideur supérieure à la raideur dudit moyen de rappel ;
- le support appartient au châssis du véhicule automobile ; et
- le support forme une cassette distincte du châssis du véhicule automobile, qui loge ledit coulisseau et ledit moyen de rappel, et qui comporte des moyens de fixation au châssis du véhicule automobile.

L'invention propose également un véhicule automobile qui comprend :
- un châssis qui délimite un logement d'accueil,
- un volet de fond d'un coffre qui est monté mobile à rotation par rapport audit châssis pour fermer au moins partiellement ledit logement d'accueil,
- un siège qui comprend un dossier monté basculant par rapport au châssis, et
- un dispositif de réglage conforme à l'invention, dont le coulisseau et le moyen de rappel sont engagés dans ledit logement d'accueil.

D'autres caractéristiques non limitatives et avantageuses du véhicule automobile conforme à l'invention sont les suivantes :
- le dossier comprend une came qui est adaptée à venir en appui sur ladite première face d'extrémité du coulisseau pour repousser le coulisseau vers sa première position extrême ;
- la came du dossier est fixe par rapport au dossier ; et
- la came du dossier étant mobile à rotation par rapport au dossier, il est prévu des moyens de retenue de la came en position fixe par rapport au dossier, qui sont débrayables.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- les figures 1 à 3 sont des vues schématiques de côté d'un dossier de siège d'un véhicule automobile, représenté dans trois positions différentes, et d'un premier mode de réalisation d'un dispositif de réglage selon l'invention, permettant de régler la position d'un volet de fond du coffre de ce véhicule automobile ;
- la figure 4 est une vue schématique similaire à celle de la figure 3, sur laquelle apparaît un deuxième mode de réalisation du dispositif de réglage selon l'invention ;
- les figures 5 et 6 sont des vues schématiques similaires à celles des figures 1 et 3, sur lesquelles apparaissent un troisième mode de réalisation du dispositif de réglage selon l'invention ; et
- la figure 7 est une vue schématique similaire à celle de la figure 1, sur laquelle apparaît un quatrième mode de réalisation du dispositif de réglage selon l'invention.

En préliminaire, on notera que d'une figure à l'autre, les éléments identiques ou similaires des différents modes de réalisation de l'invention seront, dans la mesure du possible, référencés par les mêmes signes de référence et ne seront pas décrits à chaque fois.

De manière générale, les véhicules automobiles comportent un châssis se présentant sous la forme d'une armature métallique rigide supportant différents éléments du véhicule, par exemple, le moteur, la carrosserie, les sièges, ...

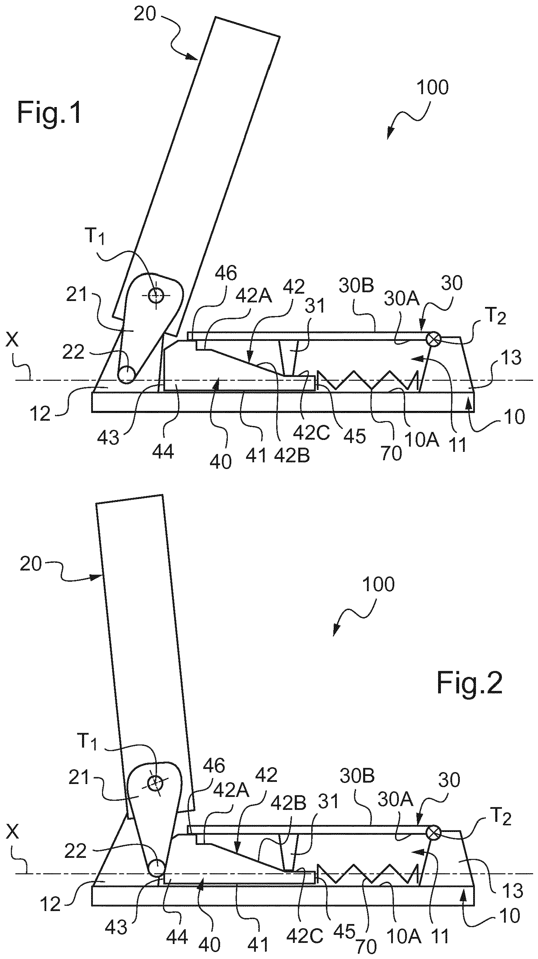

Sur les figures 1 à 7, on a représenté schématiquement une partie arrière d'un châssis 10 d'un véhicule automobile, vue de côté.

Cette partie arrière du châssis 10 correspond à celle située sous le coffre du véhicule automobile. Elle est prévue pour délimiter un logement d'accueil 11 en creux.

Cette partie arrière du châssis 10 se présente ici sous la forme d'une tôle plane horizontale.

Pour délimiter le logement d'accueil 11, la face supérieure 10A de cette partie arrière du châssis 10 supporte, d'un premier côté, une traverse avant 12, et, de l'autre, une traverse arrière 13, qui s'étendent chacune selon la largeur du véhicule automobile.

Le véhicule automobile comprend par ailleurs un volet de fond 30 de coffre, qui se présente sous la forme d'une plaque plane montée mobile à rotation par rapport au châssis 10 pour fermer le logement d'accueil 11.

Il comporte également un siège qui comprend une assise (non-représentée) et un dossier 20, monté basculant par rapport à l'assise et au châssis 10.

Le dossier 20 et le volet de fond 30 sont chacun montés mobiles sur le châssis 10 de part et d'autre du logement d'accueil 11 du châssis 10, respectivement sur la traverse avant 12 et sur la traverse arrière 13.

Par convention, dans la suite du texte, l'avant et l'arrière seront définis par rapport au véhicule automobile, l'avant désignant le côté orienté vers le capot de ce véhicule automobile et l'arrière désignant le côté orienté vers le hayon de coffre du véhicule automobile.

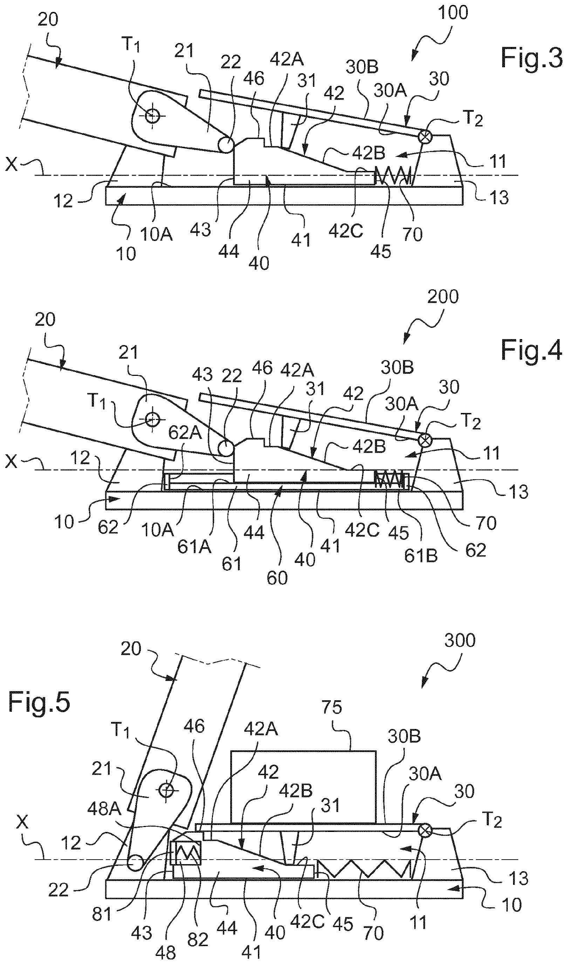

Plus particulièrement, le dossier 20 du siège est monté basculant sur le châssis 10 autour d'un axe de basculement T1 s'étendant selon la largeur du véhicule automobile, le long de l'extrémité libre supérieure de la traverse avant 12, entre une position droite (voir figure 1) et une position rabattue (voir figure 3). Lorsque le dossier 20 est en position droite, le siège peut recevoir un passager. Lorsque le dossier 20 est en position rabattue, le siège libère de l'espace dans le coffre du véhicule automobile.

Le volet de fond 30 du coffre est, quant à lui, monté mobile à rotation sur l'extrémité libre supérieure de la traverse arrière 13 autour d'un axe de rotation T2 parallèle à l'axe de basculement T1, entre une position horizontale (voir figure 1) et une position inclinée (voir figure 3). Ainsi, cet axe de rotation T2 est situé à l'opposé du dossier 20 par rapport au logement d'accueil 11 du châssis 10.

Lorsque le volet de fond 30 est en position horizontale, le volume du coffre est maximal. Lorsque le volet de fond 30 est en position inclinée, la marche formée par le bord arrière du dossier est recouverte par le volet de fond 30, ce qui facilite le chargement du coffre.

Sur les figures 1 à 7, on a représenté différents modes de réalisation d'un dispositif de réglage 100 ; 200 ; 300 ; 400 permettant de régler l'inclinaison du volet de fond 30 du coffre du véhicule automobile à la faveur du basculement du dossier 20 de siège du véhicule automobile.

Dans chacun de ces modes de réalisation de l'invention, le dispositif de réglage 100 ; 200 ; 300 ; 400 comprend un support 10 ; 60, et un coulisseau 40 qui est monté mobile en translation sur la face supérieure 10A ; 61A du support 10 ; 60, entre deux positions extrêmes, selon un axe de translation X.

L'axe de translation X du coulisseau 40 est ici perpendiculaire à l'axe de basculement T1 du dossier 20, et est en pratique orienté selon la longueur du véhicule automobile.

Le coulisseau 40 se présente ici globalement sous la forme d'un monolithe qui comprend :
- une face inférieure 41 qui s'appuie sur la face supérieure 10A ; 61 A du support 10 ; 60,
- une face supérieure 42 opposée qui forme une face principale du coulisseau 40,
- une face d'extrémité avant 43,
- une face d'extrémité arrière 45 opposée, et
- deux faces latérales 44.

La face d'extrémité avant 43 est agencée de telle sorte que, lorsque le dossier 20 du siège bascule vers sa position rabattue, une partie de ce dossier 20 vient en appui contre cette face d'extrémité avant 43 pour repousser le coulisseau 40 vers une première position extrême (voir figures 3 et 4), dite position extrême reculée.

La face supérieure 42 comporte une rampe 42B qui est inclinée par rapport à l'axe de translation X, vers l'arrière, et sur laquelle le volet de fond 30 est adapté à s'appuyer.

Ainsi, lorsque le coulisseau 40 coulisse vers sa position extrême reculée, la rampe 42B repousse le volet de fond 30 vers le haut, de manière que celui-ci bascule en position inclinée.

Le dispositif de réglage 100 ; 200 ; 300 ; 400 comprend par ailleurs un moyen de rappel 70 du coulisseau 40 vers sa seconde position extrême (voir figure 1), dite position extrême avancée.

Ainsi, lorsque le dossier 20 est ramené par l'usager vers sa position droite, le moyen de rappel 70 permet de repousser le coulisseau 40 en position extrême avancée, si bien que le volet de fond 30 du coffre est libre de revenir en position horizontale, sous l'effet de la pesanteur.

Ainsi, grâce à l'invention, le volet de fond 30 du coffre prend une position optimale à la faveur du basculement du dossier 20 du siège, sans que l'usager ait besoin de le positionner manuellement.

Dans les quatre modes de réalisation représentés sur les figures 1 à 7, les coulisseaux 40 et les moyens de rappel 70 sont semblables.

Chaque coulisseau 40 présente une forme profilée suivant la largeur du véhicule automobile, de sorte que ses faces d'extrémités avant 43 et arrière 45, ses faces latérales 44 et sa face inférieure 41 sont toutes sensiblement planes. Les faces d'extrémités avant 43 et arrière 45 s'étendent parallèlement l'une par rapport à l'autre, orthogonalement à la face inférieure 41.

Comme le montre bien la figure 1, sa face supérieure 42 présente quant à elle une forme particulière.

Elle présente ainsi, depuis son bord arrière jusqu'à son bord avant, un méplat inférieur 42C, la rampe 42B, un méplat supérieur 42A et un trottoir 46.

Avantageusement, la rampe 42B est plane et forme avec l'axe de translation X un angle θ1 compris entre 5 degrés et 50 degrés, qui est préférentiellement compris entre 10 degrés et 30 degrés.

Le méplat inférieur 42C s'étend alors entre la rampe 42B et la face d'extrémité arrière 45, dans un plan parallèle à l'axe de translation X et au plan de la face inférieure 41 du coulisseau 40.

Le méplat supérieur 42A s'étend entre la rampe 42B et le trottoir 46, dans un plan parallèle à l'axe de translation X et au plan de la face inférieure 41 du coulisseau 40.

Le trottoir 46 s'étend quant à lui, entre le méplat supérieur 42A et la face d'extrémité avant 43 du coulisseau 40. Il présente, du côté du méplat supérieur 42A, une face arrière qui s'étend dans un plan orthogonal à ce méplat supérieur 42A.

Ici, l'arête qui s'étend entre le trottoir 46 et la face d'extrémité avant 43 est biseautée.

Le coulisseau 40 s'étend en largeur selon une direction perpendiculaire à l'axe de translation X, sur une distance comprise entre 100 millimètres et 150 millimètres.

Le coulisseau 40 est réalisé d'une seule pièce en matière métallique, mais on pourrait envisager qu'il soit formé d'une matière différente, par exemple en matière plastique.

Le moyen de rappel 70 est ici un ressort 70 de compression, qui s'interpose entre la face d'extrémité arrière 45 du coulisseau 40 et la traverse arrière 13 du châssis 10, et qui est monté précontraint entre ces deux éléments.

Ce ressort 70 présente ici une raideur k1 comprise entre 5 N.m⁻¹ et 40 N.m⁻¹, qui est préférentiellement comprise entre 10 N.m⁻¹ et 30 N.m⁻¹.

Comme le montent les figures 1 à 7, le dossier 20 comprend une came 21 qui est destinée à s'appuyer sur la face d'extrémité avant 43 du coulisseau 40 pour repousser le coulisseau 40 vers sa position extrême reculée lorsque le dossier 20 bascule vers sa position rabattue.

Cette came 21 est rapportée sur l'un des côtés du dossier 20. Elle s'étend en saillie du bord inférieur du dossier 20, dans la continuité du dossier 20.

Cette came 21 est plane et présente ici une forme ovale, avec une embase large et un nez 22 arrondi, mais on pourrait envisager une forme différente, par exemple la forme d'un haricot.

Elle est raccordée au dossier 20 du siège par son embase et vient en appui contre le coulisseau 40 par son nez 22.

La forme arrondie du nez 22 de la came 21 permet de réduire les frottements de contact entre la came 21 et le coulisseau 40.

La came 21 est ici réalisée d'une seule pièce en matière métallique, mais on pourrait envisager qu'elle soit formée d'une matière différente, par exemple en matière plastique.

Le volet de fond 30 du coffre, qui se présente sous la forme d'une plaque plane, comporte une face interne 30A orientée vers le logement d'accueil 11 du châssis 10 à partir de laquelle une jambe 31 s'étend en saillie.

C'est plus particulièrement par cette jambe 31 que le volet de fond 30 est adapté à coopérer avec la face supérieure 42 du coulisseau 40 pour s'incliner à la faveur du déplacement du coulisseau 40.

Cette jambe 31 présente ici une section qui se réduit depuis son extrémité rattachée à la face interne 30A du volet de fond 30 vers son extrémité libre.

Le volet de fond 30 est ici réalisé d'une seule pièce en matière plastique, mais on pourrait envisager qu'il soit formé d'une matière différente, par exemple d'une matière constituée de fibres de bois dur compressées à haute pression et recouverte en surface d'un tapis de protection.

Selon le premier mode de réalisation du dispositif de réglage 100 représenté sur les figures 1 à 3, le support 10 sur lequel s'appuie le coulisseau 40 appartient au châssis 10 du véhicule automobile.

Plus particulièrement, la face inférieure 41 du coulisseau 40 est directement disposée sur la face supérieure 10A du châssis 10, et le ressort 70 de rappel du coulisseau 40 s'interpose entre la face d'extrémité arrière 45 du coulisseau 40 et la traverse arrière 13 du châssis 10.

La came 21 est ici fixe par rapport au dossier 20 de siège.

Sur la figure 1, le dossier 20 est en position droite, de sorte que la came 21 du dossier 20 de siège n'est pas en appui contre le coulisseau 40.

Le coulisseau 40 est donc maintenu en position extrême avancée par le ressort 70 précontraint.

La jambe 31 du volet de fond 30 du coffre repose alors sur le méplat inférieur 42C du coulisseau 40, si bien que le volet de fond 30 du coffre est maintenu en position horizontale.

Le volet de fond 30 est alors apte à recevoir une lourde charge sur sa face externe 30B (opposée à la face interne 30A), sans risquer de s'affaisser dans le logement d'accueil 11 du châssis 10.

Sur la figure 2, le dossier 20 est dans une position intermédiaire entre sa position droite et sa position rabattue, de telle sorte que sa came 21 est en contact avec la face d'extrémité avant 43 du coulisseau 40. Le coulisseau 40 est quant à lui toujours dans sa position extrême avancée.

Sur la figure 3, le dossier 20 est dans une position proche de sa position rabattue, dans laquelle la came 21 du dossier 20 repousse le coulisseau 40 dans une position proche de sa position extrême avant, de manière à incliner le volet de fond 30 du coffre.

Lorsque le dossier 20 de siège est dans sa position rabattue (position non-représentée), la jambe 31 du volet de fond 30 du coffre est en appui contre le méplat supérieur 42A du coulisseau 40.

Dans cette position, le volet de fond 30 du coffre est alors dans une position stable lui permettant d'accueillir de lourdes charges, sur sa face externe 30B. Grâce au méplat supérieur 42A, le poids de ces charges ne risque alors pas de forcer le coulisseau 40 à revenir en position extrême avant.

Sur la figure 4, on a représenté le deuxième mode de réalisation du dispositif de réglage 200 qui se distingue du premier mode de réalisation du dispositif de réglage 100 représenté sur les figures 1 à 3 par le fait que le support 60 forme une cassette distincte du châssis 10 du véhicule automobile, qui comprend des moyens de fixation au châssis 10 du véhicule automobile.

La cassette 60 présente une forme globalement parallélépipédique creuse et est ouverte sur le dessus. Elle comporte ainsi une paroi de fond 61 rectangulaire, à partir des bords de laquelle s'élève une paroi latérale 62.

La face supérieure 61 A de la paroi de fond 61 forme la face d'appui sur laquelle repose le coulisseau 40.

Les faces intérieures 62A de deux des côtés opposés de la paroi latérale 62 forment quant à elles des butées pour le coulisseau 40. Le ressort 70 est d'ailleurs interposé entre la face intérieure 62A de l'un de ces côtés et la face d'extrémité arrière 45 du coulisseau 40.

Le fond 61 de cette cassette 60 comprend une face inférieure 61 B qui est disposée sur la face supérieure 10A du châssis 10.

La cassette 60 est ici fixée au châssis 10 du véhicule automobile, dans le logement d'accueil 11, soit par un montage en force, soit par collage, ou vissage ou soudage. En variante, on pourrait envisager d'autres moyens de fixation de cette cassette au châssis, par exemple, par encliquetage ou sertissage.

Dans les deux premiers modes de réalisation de l'invention représentés sur les figures 1 à 4, on comprend que lorsque le volet de fond 30 est en position horizontale et que l'usager positionne une lourde charge sur le volet de fond 30 du coffre, l'usager risque de ne pas pouvoir basculer le dossier 20 de siège vers sa position rabattue.

Il est alors prévu, dans les troisième et quatrième modes de réalisation du dispositif de réglage 300 ; 400 représentés sur les figures 5 à 7, des moyens de débrayage 81, 82 ; 23 qui permettent au dossier 20 du siège de basculer vers sa position rabattue lorsque le coulisseau 40 est bloqué en position extrême avant. Ces moyens de débrayage 81, 82 ; 23 sont ici automatiques en ce sens qu'ils n'ont pas à être manoeuvrés par l'usager.

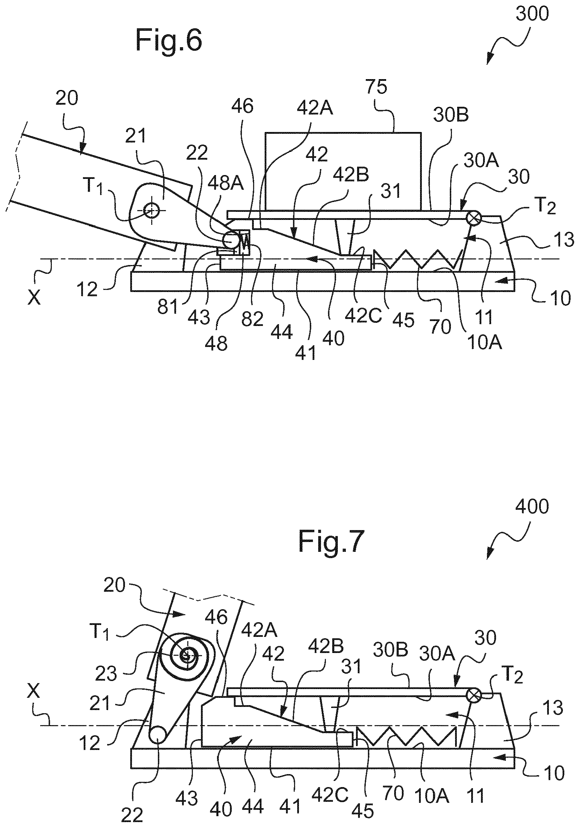

Dans le troisième mode de réalisation de l'invention représenté sur les figures 5 et 6, les moyens de débrayage 81, 82 sont portés par le coulisseau 40.

Pour cela, le coulisseau 40 présente une cavité 48 en creux dans sa face d'extrémité avant 43, de forme cylindrique.

Ce moyen de débrayage 81, 82 comprend alors ici une lame 81 de forme complémentaire pour fermer la cavité 48, contre laquelle la came 21 vient en appui à la faveur du basculement du dossier 20 de siège.

Cette lame 81 est alors adaptée à s'enfoncer dans la cavité 48 prévue dans la face d'extrémité avant 43 du coulisseau 40.

La lame 81 présente ici une forme rectangulaire, mais on pourrait envisager une lame présentant une forme différente, par exemple, circulaire ou carrée.

Le moyen de débrayage 81, 82 comprend également un ressort de compression 82 qui s'interpose entre le fond 48A de la cavité 48 et la lame 81, et qui présente une raideur k2 supérieure à la raideur k1 du ressort 70. La raideur k2 du ressort de compression 82 est ici comprise entre 5 N.m⁻¹ et 60 N.m⁻¹, et est préférentiellement comprise entre 15 N.m⁻¹ et 45 N.m⁻¹.

Ce ressort de compression 82 est adapté à rappeler la lame 81 vers une position avancée dans laquelle elle affleure la face d'extrémité avant 43 du coulisseau 40. Un moyen de buté non représenté permet de retenir la lame 81 dans la cavité 48.

En pratique, lorsque la masse des charges 75 posées sur le volet de fond 30 est importante (par exemple supérieure à 20 kilogrammes) et que l'usager bascule le dossier 20 vers sa position rabattue, la came 21 va déplacer non pas le coulisseau 40 (qui est bloqué par le poids des charges), mais seulement lame 81 vers le fond 48A de la cavité 48, en comprimant le ressort 82 (voir figure 6).

Ainsi, la came 21, le coulisseau 40 et la jambe 31 du volet de fond 30 sont préservés d'une éventuelle détérioration tout en autorisant à l'usager le basculement du dossier 20 de siège.

Dans le quatrième mode de réalisation du dispositif de réglage 400 représenté sur la figure 7, le moyen de débrayage 23 est porté par la came 21.

La came 21 est alors montée mobile à rotation sur le dossier 20 et elle comprend un moyen de retenu 23 en position fixe qui est débrayable.

Cette came 21 est ici mobile à rotation autour de l'axe de basculement T1 du dossier 20 de siège.

Le moyen de retenu et le moyen de débrayage sont ici confondus et formés par un ressort de torsion 23 dont une extrémité est fixée au dossier 20 et dont l'autre extrémité est fixée à la came 21.

La raideur de ce ressort de torsion 23 est prévue de telle sorte que, lorsque la masse des charges posées sur le volet de fond 30 du coffre est importante (ce qui bloque le coulisseau 40) et que l'usager bascule le dossier 20 vers sa position rabattue, la came 21 puisse basculer autour de l'axe de basculement T1 du dossier 20 sans nécessiter de l'usager un effort trop important.

La raideur de ce ressort de torsion 23 est par ailleurs prévue de telle sorte que, lorsque la masse des charges posées sur le volet de fond 30 du coffre est réduite et que l'usager bascule le dossier 20 vers sa position rabattue, la came 21 ne pivote pas par rapport au dossier 20 et elle force le coulisseau 40 à coulisser vers sa position extrême arrière, ce qui permet de déplacer le volet de fond 30 en position inclinée.

On notera enfin que si le véhicule comporte une banquette arrière, un seul dispositif de réglage 100 ; 200 ; 300 ; 400 est nécessaire pour incliner le volet de fond 30.

En revanche, si le véhicule automobile comprend au moins deux sièges arrière distincts dont les dossiers sont basculants, on pourra placer un dispositif de réglage derrière chaque siège, de manière à pouvoir incliner le volet de fond du coffre à la faveur du basculement d'un seul ou des deux dossiers.

On pourrait par ailleurs prévoir, en utilisant des moyens de réglage débrayables, que le basculement d'un seul de ces deux dossiers ne provoque pas l'inclinaison du volet de fond, et que le basculement des deux dossiers soit nécessaire pour provoquer cette inclinaison du volet de fond.

Selon une variante de réalisation de l'invention non-représentée, on pourrait envisager que le dispositif de réglage représenté sur la figure 4 comporte un moyen de débrayage, tel que celui représenté sur les figures 5 ou 7.

Sur les figures, on a uniquement représenté une came 21 sur un des bords latéraux du dossier 20, mais on pourrait envisager de placer une came de chaque côté des dossiers du véhicule automobile avec des dispositifs de réglage en correspondance.

On pourrait, par ailleurs, utiliser un ressort de traction pour rappeler le coulisseau dans sa position extrême avancée.

On pourrait en outre envisager, dans le mode de réalisation de la figure 4, de fixer la cassette sur le châssis via une pièce intermédiaire.

## Revendications

1. Dispositif de réglage (100 ; 200 ; 300 ; 400) pour régler l'inclinaison d'un volet de fond (30) d'un coffre de véhicule automobile à la faveur du basculement d'un dossier (20) de siège du véhicule automobile, comprenant :
- un support (10 ; 60),
- un coulisseau (40) qui est adapté à être monté mobile en translation sur une face d'appui (10A; 61 A) du support (10 ; 60) entre une première et une seconde positions extrêmes, selon un axe de translation (X), ce coulisseau (40) présentant une première face d'extrémité (43) sur laquelle une partie du dossier (20) de siège est adaptée à venir en appui à la faveur du basculement du dossier (20) de siège pour repousser le coulisseau (40) vers sa première position extrême, et une face principale (42) comportant une rampe (42B) qui est inclinée par rapport audit axe de translation (X) et sur laquelle le volet de fond (30) est adapté à s'appuyer par une jambe (31) s'étendant en saillie à partir d'une face interne (30A) du volet de fond (30), de telle sorte que la translation du coulisseau (40) vers sa première position extrême provoque l'inclinaison du volet de fond (30), et
- un moyen de rappel (70) dudit coulisseau (40) vers sa seconde position extrême.

2. Dispositif de réglage (100 ; 200 ; 300 ; 400) selon la revendication 1, dans lequel la face principale (42) du coulisseau (40) comprend un méplat supérieur (42A) s'étendant entre la rampe (42B) et la première face d'extrémité (43), dans un plan parallèle audit axe de translation (X).

3. Dispositif de réglage (100; 200; 300; 400) selon l'une des revendications 1 et 2, dans lequel la face principale (42) du coulisseau (40) comprend un méplat inférieur (42C) s'étendant entre la rampe (42B) et une seconde face d'extrémité (45) qui est située à l'opposée de ladite première face d'extrémité (43), dans un plan parallèle audit axe de translation (X).

4. Dispositif de réglage (300) selon l'une des revendications 1 à 3, dans lequel le coulisseau (40) présente une cavité (48) en creux dans ladite première face d'extrémité (43), qui loge un moyen de débrayage (81, 82) adapté à dissocier l'inclinaison du volet de fond (30) du basculement du dossier (20) de siège.

5. Dispositif de réglage (300) selon la revendication 4, dans lequel le moyen de débrayage (81, 82) comprend, d'une part, une lame (81) contre laquelle ladite partie du dossier (20) de siège est adaptée à venir en appui à la faveur du basculement du dossier (20) de siège et qui est adaptée à s'enfoncer dans ladite cavité (48), et, d'autre part, un ressort (82) qui s'interpose entre un fond (48A) de ladite cavité (48) et ladite lame (81), et, qui présente une raideur (k2) supérieure à la raideur (k1) dudit moyen de rappel (70).

6. Dispositif de réglage (100 ; 300 ; 400) selon l'une des revendications 1 à 5, dans lequel le support (10) appartient au châssis (10) du véhicule automobile.

7. Dispositif de réglage (200) selon l'une des revendications 1 à 5, dans lequel le support (60) forme une cassette distincte du châssis (10) du véhicule automobile, qui loge ledit coulisseau (40) et ledit moyen de rappel (70), et qui comporte des moyens de fixation au châssis (10) du véhicule automobile.

8. Véhicule automobile comprenant :
- un châssis (10) qui délimite un logement d'accueil (11),
- un volet de fond (30) d'un coffre qui est monté mobile à rotation par rapport audit châssis (10) pour fermer au moins partiellement ledit logement d'accueil (11),
- un siège qui comprend un dossier (20) monté basculant par rapport au châssis (10), et
- un dispositif de réglage (100; 200; 300; 400) selon l'une des revendications précédentes, dont le coulisseau (40) et le moyen de rappel (70) sont engagés dans ledit logement d'accueil (11).

9. Véhicule automobile selon la revendication 8, dans lequel le dossier (20) comprend une came (21) qui est adaptée à venir en appui sur ladite première face d'extrémité (43) du coulisseau (40) pour repousser le coulisseau (40) vers sa première position extrême.

10. Véhicule automobile selon la revendication 9, dans lequel la came (21) du dossier (20) est fixe par rapport au dossier (20).

11. Véhicule automobile selon la revendication 9, dans lequel, la came (21) du dossier (20) étant mobile à rotation par rapport au dossier (20), il est prévu des moyens de retenue (23) de la came (21) en position fixe par rapport au dossier (20), qui sont débrayables.

## Patentansprüche

1. Einstellvorrichtung (100 ; 200 ; 300 ; 400), um die Neigung einer Bodenklappe (30) eines Kofferraums eines Kraftfahrzeugs durch das Kippen einer Sitzrückenlehne (20) des Kraftfahrzeugs einzustellen, aufweisend:
- einen Träger (10; 60),
- einen Gleitschieber (40), welcher dafür angepasst ist, auf einer Stützfläche (10A; 61A) des Trägers (10; 60) zwischen einer ersten und einer zweiten extremen Position gemäß einer Bewegungsachse (X) verschiebbar beweglich zu sein, wobei dieser Gleitschieber eine erste Endfläche (43), an welcher ein Abschnitt der Sitzrückenlehne (20) angepasst ist, sich durch das Kippen der Sitzrückenlehne (20) abzustützen, um den Gleitschieber (40) in Richtung auf seine erste extreme Position zu verschieben,
und eine Hauptfläche (42) aufweist, welche eine Rampe (42B) umfasst, welche in Bezug auf die Bewegungsachse (X) geneigt ist und an welcher die Bodenklappe (30) angepasst ist, sich über ein Bein (31) abzustützen, welches sich vorspringend von einer inneren Fläche (30A) der Bodenklappe (30) derartig erstreckt, dass die Verschiebung des Gleitschiebers (40) in Richtung auf seine erste extreme Position die Neigung der Bodenklappe (30) bewirkt, und
- ein Mittel zum Rückstellen (70) des Gleitschiebers (40) in Richtung auf seine zweite extreme Position.

2. Einstellvorrichtung (100 ; 200 ; 300 ; 400) nach Anspruch 1, bei welcher die Hauptfläche (42) des Gleitschiebers (40) eine obere Abflachung (42A) aufweist, welche sich zwischen der Rampe (42B) und der ersten Endfläche (43) in einer Ebene parallel zu der Bewegungsachse (X) erstreckt.

3. Einstellvorrichtung (100 ; 200 ; 300 ; 400) nach einem der Ansprüche 1 und 2, bei welcher die Hauptfläche (42) des Gleitschiebers (40) eine untere Abflachung (42C) aufweist, welche sich zwischen der Rampe (42B) und der zweiten Endfläche (45), welche der ersten Endfläche (43) gegenüber liegend angeordnet ist, in einer Ebene parallel zu der Bewegungsachse (X) erstreckt.

4. Einstellvorrichtung (300) nach einem der Ansprüche 1 bis 3, bei welcher der Gleitschieber (40) eine hohle Aushöhlung (48) in der ersten Endfläche (43) aufweist, welche ein Entkupplungsmittel (81, 82) aufnimmt, welches dafür angepasst ist, die Neigung der Bodenklappe (30) vom Kippen der Sitzrückenlehne (20) zu trennen.

5. Einstellvorrichtung (300) nach Anspruch 4, bei welcher das Entkupplungsmittel (81, 82) einerseits eine Zunge (81) aufweist, gegen welche der Teil der Sitzrückenlehne (20) angepasst ist, sich durch das Kippen der Sitzrückenlehne (20) abzustützen und welcher dafür angepasst ist, in die Aushöhlung (48) einzudringen, und andererseits eine Feder (82), welche sich zwischen einen Boden (48A) der Aushöhlung (48) und die Zunge (81) zwischenschaltet und welche eine Steifheit (k2) aufweist, welche größer als die Steifheit (k1) des Rückstellmittels (70) ist.

6. Einstellvorrichtung (100 ; 300 ; 400) nach einem der Ansprüche 1 bis 5, bei welcher der Träger (10) der Karosserie (10) des Kraftfahrzeugs angehört.

7. Einstellvorrichtung (200) nach einem der Ansprüche 1 bis 5, bei welcher der Träger (60) eine von der Karosserie (10) des Kraftfahrzeugs getrennte Kassette bildet, welche den Gleitschieber (40) und das Rückstellmittel (70) aufnimmt und welche Mittel zur Befestigung an der Karosserie (10) des Kraftfahrzeugs aufweist.

8. Kraftfahrzeug, aufweisend:
- eine Karosserie (10), welche eine Aufnahmeausnehmung (11) abgrenzt,
- eine Bodenklappe (30) eines Kofferraums, welche in Bezug auf die Karosserie (10) drehbeweglich montiert ist, um zumindest teilweise die Aufnahmeausnehmung (11) zu schließen,
- einen Sitz, welcher eine Rückenlehne (20) aufweist, welche kippend in Bezug auf die Karosserie (10) montiert ist, und
- eine Einstellvorrichtung (100 ; 200 ; 300 ; 400) nach einem der vorhergehenden Ansprüche, bei welcher der Gleitschieber (40) und das Rückstellmittel (70) in die Aufnahmeausnehmung (11) eingebracht sind.

9. Kraftfahrzeug nach Anspruch 8, bei welchem die Rückenlehne (20) eine Nocke (21) aufweist, welche dafür angepasst, sich auf der ersten Endfläche (43) des Gleitschiebers (40) abzustützen, um den Gleitschieber (40) in Richtung auf seine erste extreme Position zu verschieben.

10. Kraftfahrzeug nach Anspruch 9, bei welchem die Nocke (21) der Rückenlehne (20) in Bezug auf die Rückenlehne (20) fest ist.

11. Kraftfahrzeug nach Anspruch 9, bei welchem, wenn die Nocke (21) der Rückenlehne (20) in Bezug auf die Rückenlehne (20) drehbeweglich ist, Mittel zum Rückstellen (23) der Nocke (21) in eine feste Position in Bezug auf die Rückenlehne (20) vorgesehen sind, welche auskuppelbar sind.

## Claims

1. Adjustment device (100; 200; 300; 400) for adjusting the inclination of a bottom flap (30) of a motor vehicle luggage compartment by virtue of the tilting of a seat back (20) of the motor vehicle, comprising:
- a support (10; 60),
- a slider (40) which is adapted to be mounted in a translationally movable manner on a bearing face (10A; 61A) of the support (10; 60) between a first and a second end position along a translation axis (X), this slider (40) having a first end face (43) on which a part of the seat back (20) is adapted to bear by virtue of the tilting of the seat back (20) in order to push the slider (40) towards its first end position, and a main face (42) comprising a ramp (42B) which is inclined with respect to the said translation axis (X) and on which the bottom flap (30) is adapted to bear by a leg (31) extending in a projecting manner from an inner face (30A) of the bottom flap (30), in such a way that the translation of the slider (40) towards its first end position causes the inclination of the bottom flap (30), and
- a return means (70) for returning the said slider (40) towards its second end position.

2. Adjustment device (100; 200; 300; 400) according to Claim 1, in which the main face (42) of the slider (40) comprises an upper flat portion (42A) extending between the ramp (42B) and the first end face (43) in a plane parallel to the said translation axis (X).

3. Adjustment device (100; 200; 300; 400) according to either of Claims 1 and 2, in which the main face (42) of the slider (40) comprises a lower flat portion (42C) extending between the ramp (42B) and a second end face (45), which is situated oppositely from the said first end face (43), in a plane parallel to the said translation axis (X).

4. Adjustment device (300) according to one of Claims 1 to 3, in which the slider (40) has a recessed cavity (48) in the said first end face (43), which cavity houses a disengaging means (81, 82) adapted to dissociate the inclination of the bottom flap (30) from the tilting of the seat back (20).

5. Adjustment device (300) according to Claim 4, in which the disengaging means (81, 82) comprises, on the one hand, a blade (81) against which the said part of the seat back (20) is adapted to bear by virtue of the tilting of the seat back (20) and which is adapted to be driven into the said cavity (48), and, on the other hand, a spring (82) which is interposed between a bottom (48A) of the said cavity (48) and the said blade (81) and which has a stiffness (k2) greater than the stiffness (k1) of the said return means (70).

6. Adjustment device (100; 300; 400) according to one of Claims 1 to 5, in which the support (10) belongs to the chassis (10) of the motor vehicle.

7. Adjustment device (200) according to one of Claims 1 to 5, in which the support (60) forms a cassette which is separate from the chassis (10) of the motor vehicle, the said cassette housing the said slider (40) and the said return means (70) and comprising means for fastening to the chassis (10) of the motor vehicle.

8. Motor vehicle comprising:
- a chassis (10) which delimits an accommodation housing (11),
- a bottom flap (30) of a luggage compartment which is mounted rotatably with respect to the said chassis (10) in order to at least partially close the said accommodation housing (11),
- a seat which comprises a seat back (20) mounted tiltably with respect to the chassis (10), and
- an adjustment device (100; 200; 300; 400) according to one of the preceding claims, the slider (40) and the return means (70) of which are engaged in the said accommodation housing (11).

9. Motor vehicle according to Claim 8, in which the seat back (20) comprises a cam (21) which is adapted to bear on the said first end face (43) of the slider (40) in order to push the slider (40) towards its first end position.

10. Motor vehicle according to Claim 9, in which the cam (21) of the seat back (20) is fixed with respect to the seat back (20).

11. Motor vehicle according to Claim 9 in which, with the cam (21) of the seat back (20) being rotatable with respect to the seat back (20), means (23) for retaining the cam (21) in a fixed position with respect to seat back (20) are provided, these means being disengagable.
